(19) Europäisches Patentamt / European Patent Office / Office européen des brevets

(11) **EP 3 211 548 A1**

(12) **EUROPEAN PATENT APPLICATION**

(43) Date of publication:
**30.08.2017 Bulletin 2017/35**

(51) Int Cl.:
**G06F 17/30** *(2006.01)*    *G06F 9/48* *(2006.01)*

(21) Application number: **17157456.9**

(22) Date of filing: **22.02.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.02.2016  IN 201631006943**

(71) Applicant: **Siemens Aktiengesellschaft 80333 München (DE)**

(72) Inventors:
- **KALAKANTI, Arun Kumar 560068 Bangalore, Karnataka (IN)**
- **SUDHAKARAN, Vinay 560076 Bangalore, Karnataka (IN)**

(74) Representative: **Patentanwaltskanzlei WILHELM & BECK Prinzenstraße 13 80639 München (DE)**

(54) **SYSTEM, METHOD AND A COMPUTER PROGRAM PRODUCT FOR SYSTEM STATE AND POLICY BASED SCHEDULING OF QUERIES**

(57)    A computer implemented method, system, and a computer program product for scheduling one or more queries are provided. The computer implemented system comprises a query management system in operable communication with query execution engines that are massively parallel query execution engines. The query management system receives queries and query execution requirements, for example, service level agreements, policies governing query execution, for at least one of the queries. The query management system generates prediction models based on query features and system state variables. The query management system predicts execution times for the queries based on the prediction models and recommends at least one query execution engine for scheduling of the queries based on the execution times. The query management system also prioritizes each of the query execution engines for scheduling of the queries. The query management system verifies the query execution requirements for scheduling of the queries on query execution engines.

FIG 1

**Description**

CROSS-REFERENCE TO RELATED APPLICATION

This application claims benefit of Indian patent application number 201631006943 (filing date 29. Feb 2016), the entire contents of which are hereby incorporated by reference.

BACKGROUND

Typically, data sets that are currently being handled by organizations are complex in nature due to the unstructured and/or semi-structured data contained in the data sets. Such unstructured and/or semi-structured data is typically, data generated by sensors, web logs, social media, mobile communication, customer service records, etc. There exist a variety of software frameworks to store and analyze large volumes of data in a massively parallel fashion, for example, by mixing and matching data from many disparate sources to derive meaningful insights from the underlying data. However, such software frameworks typically lack in enabling the users of the software frameworks to interactively query and analyze the data sets using their existing business intelligence tools in an efficient manner via a simple interface.

Multiple massively parallel query processing (MPQP) tools have been developed for enabling organizations to perform interactive querying on massive data sets, however, each of these tools is typically optimized to perform efficiently for a certain class of queries, operating on a certain known data type and format, on a well defined hardware and software configuration. Also, the MPQP tools typically fail to consider an overall status of the query associated parameters and system state associated parameters before scheduling queries for execution. This in turn leads to considerable optimization of the software frameworks, for example, data model and storage model, for each MPQP tool, in order to obtain faster query response times during query execution. Thus, in case where multiple MPQP tools are to be used for execution of a query, repeated optimization of the software framework is time consuming and cumbersome. Such software frameworks fail to analyze and schedule the MPQP tools for processing the queries. Also, due to changing technological landscapes, updated and new versions of each of the MPQP tools, are released frequently which require iterative training of the users which in turn increases the cost and processing time required in execution of queries.

SUMMARY

This summary is provided to introduce a selection of concepts in a simplified form that are further disclosed in the detailed description. This summary is not intended to identify key or essential inventive concepts of the claimed subject matter, nor is it intended for determining the scope of the claimed subject matter.

A computer implemented method of scheduling one or more queries is disclosed herein. The query scheduling is performed for execution of queries on two or more query execution engines. The computer implemented method receives one or more queries and query execution requirements for at least one of the queries. The query execution requirements comprise service level agreements associated with the queries and policies governing execution of the queries. The computer implemented method generates a plurality of prediction models based on query features extracted from the queries and system state variables. In a preferred embodiment, the prediction models are generated using datasets addressed by the queries and the system state variables comprising, for example, cluster load, central processing unit (CPU) utilization, disk utilization, etc. In this preferred embodiment, query features specific to a particular query on a particular query execution engine are extracted. For example, a data locality, that is, a chunk of dataset addressed by a query that a specific query execution engine is responsible for processing is determined from the query features. Thus, based on the extracted query features and the system state variables one or more model generation parameters may be determined for generating the prediction models. These model generation parameters comprise, for example, fusion variables such as the data locality of a query, an affinity of a query for a particular query execution engine for a particular operation being performed by the query, etc.

The computer implemented method predicts execution times for the queries based on the prediction models. The prediction models determine nonlinear relationships between the query features of the queries and also between the system state variables. The computer implemented method recommends at least one of two or more query execution engines for scheduling of the queries based on the execution times. In a preferred embodiment, the computer implemented method determines a scheduling priority for each of the two or more query execution engines based on one or more scheduling parameters comprising, for example, a number of queries to be scheduled, system state variables, data locality of a query for a query execution engine, etc. The computer implemented method verifies the query execution requirements for scheduling of the queries on the query execution engines. The computer implemented method performs one or more execution actions when verification of the query execution requirements fails. The execution actions comprise delaying execution of the queries on at least one of the two or more query execution engines, re-recommending at least one of the two or more query execution engines, and/or terminating the execution of the queries on at least one of the query execution engines. The computer implemented method monitors execution of the queries on the query execution engines and records execution statistics associated with execution of the queries, in a knowledgebase. The computer implemented method performs re-generating one or more of the prediction models, modifying one or more of the prediction models, or updating one or more of the prediction models, based on the execution statistics.

Also, disclosed herein is a computer implemented system for scheduling one or more queries, comprising two or more query execution engines and a query management system in operable communication with the query execution engines, for example, over a communication network. The query management system, disclosed herein, comprises a data reception module for receiving one or more queries and query execution requirements for at least one of the queries, a pre-processing module for extracting query features from the queries, an ensemble module for generating a plurality of prediction models based on the query features and system state variables, for predicting execution times for the queries based on the prediction models, and for recommending at least one of two or more query execution engines for scheduling of the queries based on the execution times. The query management system further comprises a control module for verifying the query execution requirements for scheduling of the queries on at least one of the two or more query execution engines.

Also, disclosed herein is a computer program product comprising a non-transitory computer readable storage medium storing computer program codes that comprise instructions executable by at least one processor for scheduling one or more queries.

BRIEF DESCRIPTION OF THE DRAWINGS

The foregoing summary, as well as the following detailed description of the invention, is better understood when read in conjunction with the appended drawings. For the purpose of illustrating the invention, exemplary constructions of the invention are shown in the drawings. However, the invention is not limited to the specific methods and structures disclosed herein. The description of a method step or a structure referenced by a numeral in a drawing is applicable to the description of that method step or structure shown by that same numeral in any subsequent drawing herein.

FIG **1** exemplarily illustrates a computer implemented system for scheduling one or more queries.

FIG **2** exemplarily illustrates a computer implemented method of scheduling one or more queries.

FIG **3** exemplarily illustrates the architecture of a computer system employed by the query management system for scheduling one or more queries.

DETAILED DESCRIPTION

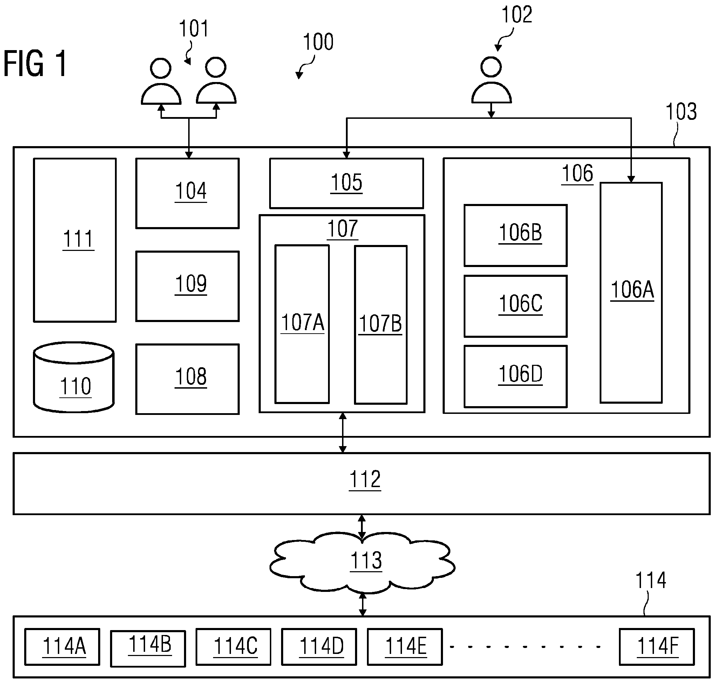

FIG **1** exemplarily illustrates a computer implemented system 100 for scheduling one or more queries. The computer implemented system 100 comprises two or more query execution engines 114, for example, 114A, 114B, 114C, etc., and a query management system 103 in operable communication with the query execution engines 114. In a preferred embodiment, the query execution engines 114 are massively parallel query processing engines. In a preferred embodiment, the query management system 103 is in operable communication with policy and resource management frameworks 112 which in turn are in operable communication with the query execution engines 114, over a communication network 113. The communication network 113 is, for example, a wired network, a wireless network, a communication network, or a network formed from any combination of these networks. The query management system 103 is accessible by users 101 who wish to execute queries using the query management system 103, via user devices, for example, personal computing devices, workstations, client devices, network enabled computing devices, any other suitable computing equipments, and combinations of multiple pieces of computing equipments. The query management system 103 is also accessible by one or more admin users 102 via the user devices. The admin users 102, for example, configure the query management system 103, provide inputs regarding policies governing execution of the queries, etc. Such policies comprise, for example, multi-tenant resource allocation and role based access controls.

In an embodiment, the query management system 103 is downloadable and usable on the user devices. In another embodiment, the query management system 103 is configured as a web based platform, for example, a website hosted on a server or a network of servers. In another embodiment, the query management system 103 is implemented in the cloud computing environment. In another embodiment, the query management system 103 is developed as a plug in query management system 103. For example, the query management system 103 is independently developed and plugged into an existing Hadoop® framework such as Cloudera® of Cloudera Inc. The query management system 103 is developed, for example, using Google App engine cloud infrastructure of Google Inc., Amazon Web Services® of Amazon Technologies, Inc., the Amazon elastic compute cloud EC2® web service of Amazon Technologies, Inc., the Google® Cloud platform of Google Inc., the Microsoft® Cloud platform of Microsoft Corporation, etc. In an embodiment, the query management system 103 is configured as a cloud computing based platform implemented as a service for analyzing data.

The query management system 103 disclosed herein comprises a non-transitory computer readable storage medium and at least one processor communicatively coupled to the non-transitory computer readable storage medium. As used herein, "non-transitory computer readable storage medium" refers to all computer readable media, for example, non-volatile media, volatile media, and transmission media except for a transitory, propagating signal. The non-transitory computer readable storage medium is configured to store computer program instructions defined by modules, for example, 104, 105, 106, 107, 108, 109, etc., of the query management system 103. The processor is configured to execute the defined computer program instructions. The query management system 103 comprises a graphical user interface (GUI) 111. The users 101 and 102 using the user devices can access the query management system 103 via the GUI 111. The GUI 111 is, for example, an online web interface, a web based downloadable application interface, etc. The query management system 103 further comprises a data reception module 104, a pre-processing module 105, a training module 106, an ensemble module 107, a monitoring and feedback module 108, and a control module 109.

The data reception module 104 receives one or more queries and query execution requirements for at least one of the queries. The query execution requirements comprise, for example, service level agreements (SLAs) associated with the queries and policies governing execution of the queries. As used herein, "service level agreements" refer to query processing standards to be adhered to while execution of the queries. The SLAs comprise, for example, a query response time to be taken for execution of a query, resource utilization for query execution, system latency etc. The policies comprise tenant resource availability on a multi-tenant infrastructure, configuration of available memory and central processing unit (CPU) for execution of queries per tenant, etc. For example, on a Hadoop® Distributed File System (HDFS), the policies comprise configuration of YARN capacity queues for each tenants to execute the queries and the role-based access control governing access rights to files and folders on the HDFS.

The data reception module 104 sends the queries to the pre-processing module 105. The pre-processing module 105 extracts query features from the queries, for example, by parsing the received queries. As used herein, "query features", refer to features of the query comprising, for example, a number of sub queries in the query, a number of aggregates, a number of where conditions, etc., and features of a dataset or a table of data that the query addresses comprising, for example, a size of a table accessed by the query, a format of the table, cardinality of joins of two or more tables accessed by the query, etc. The pre-processing module 105 receives as an input a pre-set value from the admin user 102. Based on the pre-set value received, the pre-processing module 105 considers the query to be an online query or a training query. The online query refers to a query that is to be executed whereas the training query is a query that is used for training the query management system 103 for enhancing the query execution. The pre-processing module 105 sends the online queries to the ensemble module 107 whereas the training queries are sent to the training module 106.

The ensemble module 107 generates a plurality of prediction models based on the query features and system state variables. As used herein, "prediction models" refer to regression models employing statistical analysis for determining nonlinear relationship between the dependent and independent variables of a query. These prediction models are supervised, unsupervised or semi supervised models. Also, used herein, "system state variables" refer to variable defining a dynamic processing state of the computer on which the query is to be executed. The system state variables comprise, for example, cluster load, central processing unit (CPU) utilization, disk utilization, etc. In a preferred embodiment, the ensemble module 107 generates the prediction models during a training phase of the query management system 103 and during an execution phase, the generated prediction models are used for predicting the query execution times. In a preferred embodiment, the ensemble module 107 generates prediction models using datasets addressed by the queries, for example, using query features specific to a particular query on a particular query execution engine 114, for example, 114A, 114B, 114C, or 114D, etc. These query features comprise, for example, data locality, that is, a chunk of dataset addressed by a query that a specific query execution engine 114 is responsible for processing. The prediction models are generated by dividing a dataset addressed by a query into 'n' chunks to develop 'n' models. For example, if the dataset is divided into 4 chunks, C1, C2, C3, and C4, then the chunks C2, C3 and C4 are used for the generating the first prediction model and then the first prediction model is validated using the remaining chunk i.e., chunk C1. Similarly, 'n' prediction models are generated using these 'n' chunks.

The ensemble module 107 predicts execution times for the queries based on the prediction models. In a preferred embodiment, the ensemble module 107 comprises a prediction module 107A which uses the prediction models to predict the execution times. The prediction models determine nonlinear relationships between the query features and the system state variables, for example, by predicting the dependent variables, that is, a response time that the query is estimated to take for execution when run on each of the two or more query execution engines 114 at a given system state. The ensemble module 107 recommends at least one of two or more query execution engines 114 for scheduling of the queries based on the execution times. In a preferred embodiment, the ensemble module 107 determines a scheduling priority for each of the two or more query execution engines 114 based on one or more scheduling parameters comprising, for example, a number of queries to be scheduled, the system state variables, and query features of each of the queries. In a preferred embodiment, the ensemble module 107 comprises an aggregation module 107B that aggregates the execution times for recommending at least one of two or more query execution engines 114. The aggregation module 107B determines a query execution engine 114 that is estimated to have least response time based on the result of the aggregation. These aggregation results are used to prioritize the query execution engines 114. The ensemble module 107 forwards the query to the query execution engine 114 via the policy and resource management frameworks 112 for execution.

The control module 109 verifies the query execution requirements for scheduling of the queries on the query execution engines 114 in communication with the policy and resource management frameworks 112, by ensuring that the policies received from the admin user 102 are met by the queries to be executed. The policy and resource management frameworks 112 are also responsible for resource allocation and utilization when the queries are submitted to the query execution engine 114. The query execution engine 114 executes the queries.

Once the queries are scheduled for execution on the query execution engines 114, the monitoring and feedback module 108 monitors execution of the queries on the query execution engines 114. For example, the monitoring and feedback module 108 monitors a duration for which the queries last in the scheduling queues, that is, waiting times for each of the queries and the actual execution time taken for execution of each of the queries. Once the query execution is completed, the monitoring and feedback module 108, monitors and records the execution statistics comprising, for

example, a deviation $\varepsilon$ and values of slack variables $\xi_i$, $\xi_i^*$ based on the actual execution time monitored. The knowledgebase 110 stores the execution statistics associated with execution of the queries. The knowledgebase 110 is, for example, a structured query language (SQL) data store or a not only SQL (NoSQL) data store. In an embodiment, the knowledgebase 110 can also be a location on a file system directly accessible by the query management system 103. In another embodiment, the knowledgebase 110 is configured as cloud based database implemented in a cloud computing environment, where computing resources are delivered as a service over the communication network 113. As used herein, "cloud computing environment" refers to a processing environment comprising configurable computing physical and logical resources, for example, networks, servers, storage, applications, services, etc., and data distributed over the communication network 113, for example, the internet. The cloud computing environment provides on-demand network access to a shared pool of the configurable computing physical and logical resources. The monitoring and feedback module 108 reports query execution failures, if any, on one or more query execution engines 114 to the control module 109 along with the query execution statistics.

The control module 109 performs one or more execution actions when the verification of the query execution requirements fails. The execution actions comprise, for example, delaying execution of the queries on at least one of the two or more query execution engines 114, re-recommending at least one of the two or more query execution engines 114, and terminating execution of the queries on at least one of the query execution engines 114. For example, the control module 109 reschedules such queries on a different query execution engine 114 or preempts the queries by sending requests to the policy and resource management frameworks 112. The control module 109 also determines whether to train the prediction models based on a comparison of the execution statistics with the query execution requirements, that is, the defined policies and SLAs.

The training module 106, in communication with the control module 109, performs one of re-generation of one or more of the prediction models, modification of one or more of the prediction models, and updation of one or more of the prediction models, based on the execution statistics. The training module 106 comprises a triggering module 106A, an incremental training module 106B configured to re-generate the prediction models, a modification training module 106C configured to modify the prediction models, and an updation training module 106D configured to update the prediction models. The admin user 102 controls the triggering module 106A. The triggering module 106A generates triggers comprising, for example, a boost trigger, an inhibit trigger, a forget trigger, etc. The boost trigger is generated when a prediction model is required to be re-constructed based on the old prediction models, for example, when new dimensions are added to a prediction model which requires usage of previously created prediction models as well. The inhibit trigger is generated when one or more components of the query management system 103 are under maintenance mode or being used by some third party system such as systems that are not using our model but directly using the underlying infrastructure, or a part of the query management system 103 is down and only a few queries are being submitted to the query management system 103, that is, there is less processing load on the query management system 103. When the inhibit trigger is generated, the incremental training module 106B, the modification training module 106C, and the updation training module 106D are stalled for a specific duration of time till the query management system 103 is up and running. The forget trigger is generated when a prediction model needs to be reconstructed for a fresh domain or business requirement or when the prediction model has been constructed incorrectly in the first place and therefore needs to be completely erased due to performance failure. When a forget trigger is generated, the triggering module 106A communicates the forget trigger to the prediction module 107A of the ensemble module 107. The prediction module 107A then initiates a backup of the existing prediction models and stores the backup in the knowledgebase 110 and erases the prediction models.

The incremental training module 106B, on receiving the boost trigger from the triggering module 106A, uses the previous prediction models for coming up with a new prediction model. For a sequence of previous prediction models: $h_1$, $h_2$, .. $h_i$, an incremental prediction model can be constructed using the formula given below:

$$h_i = f(h_{i-1}, X_1, \dots, X_{i-1i}, y_1, \dots, y_{i-1})$$

Where X denotes a system state and Y denotes a predicted query execution time, and wherein X and Y are obtained from the execution statistics. The modification module 106C modifies the prediction models in order to maintain an optimal consistency of nonlinear programming in the prediction model, for example, using the Karush-Kuhn-Tucker conditions. The updation training module 106D updates the logic of each of the prediction models. The updation training module 106D also serves as an interface between the training module 106 and the ensemble module 107.

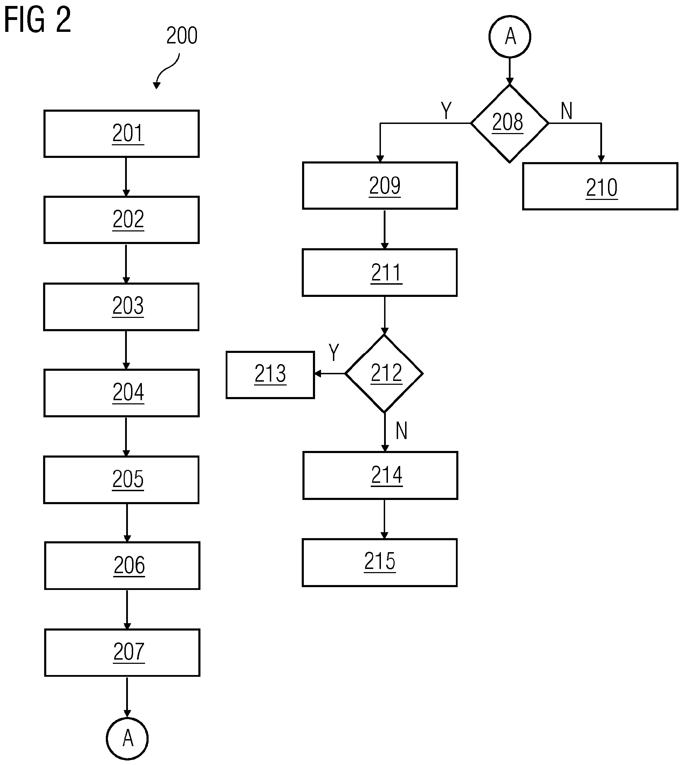

FIG **2** exemplarily illustrates a computer implemented method of scheduling one or more queries. At step 201, the data reception module 104 of the query management system 103, exemplarily illustrated in FIG **1,** receives one or more queries and query execution requirements for at least one of the queries. The queries are in various formats comprising, for example, text, image, etc. The query execution requirements comprise service level agreements associated with the queries and policies governing execution of the queries along with the service level agreements (SLAs). At step 202, the pre-processing module 105 of the query management system 103 extracts query features from the queries. At step 203, the training module 106 receives a system state from the control module 109 and the monitoring and feedback module 108 of the query management system 103. The control module 109 and the monitoring and feedback module 108 maintain processing information about the query execution engines 114 and the queries being executed by each of the query execution engines 114. This processing information is used to determine the system state. At step 204, using the system state and the query features extracted, the training module 106 determines a data locality of different query execution engines 114. As used herein, "data locality" refers to a chunk of dataset addressed by a query that a specific query execution engine 114 is responsible for processing. The chunk of dataset addressed by the query is determined from the query features. For example, when a query addressing a dataset X is processed, then the dataset X is typically divided into a number of chunks such as X1, X2 and X3, and each of the query execution engines 114 is responsible for processing only one chunk at a given instant. The data locality in such case is the chunk X1, X2 or X3 that a query execution engine 114 is supposed to process at that time instant. During the training phase, at step 205, the ensemble module 107 of the query management system 103 generates a plurality of prediction models based on query features extracted from the queries. The prediction models are generated using datasets addressed by the queries and the system state variables. The query features comprise data about the datasets addressed by the queries, using which, data locality is determined, as disclosed in the detailed description of FIG **1.** At step 206, the ensemble module 107 predicts execution times for the queries based on the prediction models. In a preferred embodiment, the execution times are predicted using the prediction models, the query features, the system state and the data locality for each query execution engines 114. The prediction models determine nonlinear relationships between the query features and the system state variables. During the execution phase, the ensemble module 107 uses the prediction models that are already generated to predict the execution times for the queries.

At step 207, the ensemble module 107 recommends at least one of two or more query execution engines 114 for execution of the queries based on the execution times. The prediction module 107A of the ensemble module 107, using the prediction models, recommends a query execution engine 114 with the least predicted query response time. In a preferred embodiment, the ensemble module 107 determines a scheduling priority for each of the two or more query execution engines 114 based on one or more scheduling parameters comprising, for example, a number of queries to be scheduled, the system state variables, and query features of each of the queries. During the execution phase, this recommendation of at least one of two or more query execution engines 114 is performed by aggregating the execution times, by the aggregation module 107B. The aggregation module 107B aggregates the inputs received from the prediction module 107A and forwards the aggregated input to the policy and resource management frameworks 112. The aggregated input comprises recommendation of at least one query execution engine 114 that can execute the query with fastest query response time. At step 208, the policy and resource management frameworks 112, in communication with the control module 109, verify the query execution requirements for execution of the queries on the query execution engines 114, that is, verify whether the query is allowed to be executed immediately based on policies such as available processing bandwidth, that is, the system state, etc. If yes, then at step 209, the query is submitted to the recommended query execution engine 114 for execution on an internal scheduler of the recommended query execution engine 114. If not, then at step 210, the query is either rejected and terminated or put in a waiting queue, that is, at step 210, one or more execution actions are performed when the verification of the query execution requirements fails. The execution actions comprise delaying execution of the queries on the query execution engines 114, re-recommending at least one of the two or more query execution engines 114, and/or terminating execution of queries on the query execution engines 114.

At step 211, the monitoring and feedback module 108 of the query management system 103 monitors execution of the queries on the query execution engines 114 and records execution statistics associated with execution of the queries in a knowledgebase 110. The performance of the query execution engines 114 is monitored using the internal scheduler of the recommended query execution engine 114. After completion of the query execution, the monitoring and feedback module 108 records an actual execution time taken by the recommended query execution engine 114 as a part of execution statistics. At step 212, the control module 109 determines, based on the recorded execution statistics, whether the actual execution time taken is greater than a response threshold. The response threshold is received in the SLA associated with the query. If the actual execution time taken is less than the response threshold, then the process ends at step 213 else, at step 214, the execution statistics are used for training the prediction models by the training module 106. Based on the execution statistics, the training module 106, at step 215, re-generates one or more of the prediction models, modifies one or more of the prediction models, or updates one or more of the prediction models, as disclosed in the detailed description of FIG 1.

Consider an example where advanced metering infrastructure (AMI) measures and collects energy usage data, that is, event data at periodic intervals, and persists them to the data warehousing systems for interactive querying or interactive analytics. Consider the following tables, Table 1, Table 2, and Table 3 for the purpose of this example:

Table 1

| ORG_ID | SDP_WID | DATE_WID | INTERVAL_VALUE | INSERT_TIME | LAST_UPD_TIME |
|---|---|---|---|---|---|
| 21 | 141 | 20120309 | 2.291667 | 9/27/2013 2:00:05 PM | 9/27/2013 2:00:05 PM |
| 21 | 141 | 20120311 | 1.723456 | 9/27/2013 2:59:58. PM | 9/27/2013 2:59:58. PM |

Table 1 named as INTERVAL_F is a Fact table that stores information about interval reads (meter data).

Table 2

| SDP_WID | ORG_ID | UDC_ID | INSERT_TIME | UPDATE_TIME |
|---|---|---|---|---|
| 1 | 3 | 15070 | 9/23/2014 1:10:47 PM | 9/23/2014 1:10:47. PM |
| 2 | 3 | 15000 | 9/23/2014 1:11:31. PM | 11/18/2014 3:03:16. PM |

Table 2 named as SDP_D is a Dimension table that stores information about service delivery points.

Table 3

| WID | CALENDAR _DATE | DATE_STRING | DAY_OF_ WEEK | DAY_OF_ MONTH | DAY_OF_YEAR |
|---|---|---|---|---|---|
| 20100 311 | 3/11/2010 12:00:00 AM | 11-03-10 | THU | 11 | 70 |
| 20100 312 | 3/12/2010 12:00:00 AM | 12-03-10 | FRI | 12 | 71 |

Table 3 named as DATE_D is another Dimension table that stores calendar days.

Assume that one of the users 101 of the query management system 103, exemplarily illustrated in FIG 1, submits a query along with the query execution requirements to the data reception module 104, which is further passed on to the pre-processing module 105. The query execution requirements comprise, for example, a desirable execution time, that is, a Query Response Time (QRT) < 15 min, but a deviation $\varepsilon$ of 10 min and slack variables $\xi_i$, $\xi_i^*$ limit of 5 min. Thus, effectively the service level agreement (SLA) associated with execution of the query can be calculated as

$$\text{SLA} = \text{QRT} + \varepsilon + \xi_i, \xi_i^* = 30 \text{ min.}$$ Consider in this example, that the admin user 102 has set some policies on resource usage and multi-tenancy of the computer implemented system 100.

A nested query is submitted by the user 101 to interactively interact with the energy usage data stored in the tables Table 1, Table 2, and Table 3. This nested query operates on a star schema performing a join between a fact table containing time stamped meter readings, that is, Table 1, and the dimension tables containing the geo-spatial information about the metering devices, that is, Table 2 and Table 3, for determining, on an average, the power consumed by a household device for each hour of a week.:

The pre-processing module 105 considers the received query either as an online query or a training data based on the pre-set value received from the admin user 102. Consider in this example, the query received is an online query which the pre-processing module 105 parses and sends to the ensemble module 107. The prediction module 107A of the ensemble module 107 receives the query and uses the prediction models, for example, PM1, PM2, and PM3, generated by the ensemble module 107 based on the query features using various methods comprising, for example, ensemble or bagging method, boosting method, Bayesian model averaging and combination method, etc., to predict the execution time of the query when executed on different query execution engines 114. Consider in this example, the query execution engines 114 are for example, Apache Hive™, Cloudera Impala® of Cloudera Inc., and Hawq® of Pivotal Software, Inc. The prediction module 107A, based on the prediction models, PM1, PM2, and PM3, predicts the following response times:

$$PM1_{QRT_{Hive}} = 50 \text{ min}$$

$$PM2_{QRT_{Hive}} = 55 \text{ min}$$

$$PM3_{QRT_{Hive}} = 58 \text{ min}$$

$$PM1_{QRT_{Impala}} = 28 \text{ min}$$

$$PM2_{QRT_{Impala}} = 22 \text{ min}$$

$$PM3_{QRT_{Impala}} = 25 \text{ min}$$

$$PM1_{QRT_{Hawq}} = 45 \text{ min}$$

$$PM2_{QRT_{Hawq}} = 48 \text{ min}$$

$$PM3_{QRT_{Hawq}} = 46 \text{ min}$$

The aggregation module 107B of the ensemble module 107 aggregates the execution times from each of the prediction models, to recommend a query execution engine 114 for most efficient query execution. On aggregation of the execution times, it is determined that, the Apache Hive® query execution engine takes approximately 54 mins, the Cloudera Impala® query execution engine takes approximately 25 mins and the Hawq® query execution engine takes approximately 46 mins. Therefore, the aggregation module 107B recommends Cloudera Impala® query execution engine. Thus, the output of the aggregation module 107B is as follows:

$$Recommended_{QRT_{Impala}} \sim 25 \text{ min}$$

The ensemble module 107 sends the query to the policy and resource management framework 112 for execution on the recommended query execution engine 114. The policy and resource management framework 112 verifies conformance to the query execution requirement, that is, the system state and the various policies associated with Cloudera Imapala® query execution engine for execution of the query. If as per these policies, it is found out that the nodes of the processor on which Cloudera Impala® query execution engine operates are fully utilized, then a feedback signal is sent through the monitoring and feedback module 108 to the control module 109 and the ensemble module 107 for rescheduling execution of the query. In such cases of rescheduling, the next recommendation from the aggregation module 107B which in this example, would be Hawq® query execution engine with approximately 46 mins response time is recommended for execution of the query. Consider in this example, the policies for Cloudera Impala® query execution engine are met. Hence, Cloudera Imapala® query execution engine executes the query and the monitoring and feedback module 108 monitors the execution statistics and the actual execution time taken. The monitoring and feedback module 108 sends the execution statistics to the control module 109.

The control module 109 determines a deviation of the actual execution time $Actual_{QRT_{Impala}}$ from the desirable QRT. Assuming, the actual execution time taken, $Actual_{QRT_{Impala}}$ = 28 min, the deviation from the desirable QRT which is 15 mins, is 28-15 = 13 mins. However, if the actual execution time $Actual_{QRT_{Impal}}$ is within limits of the SLA = 30 mins. Based on the query execution statistics the control module 109 determines whether to update the prediction models. However, as the deviation 13 mins is within the response threshold, that is, the deviation limit $(\varepsilon + \xi_i, \xi_i^*) = 15 \text{ mins}$, the control module 109 determines not to update the prediction models via the training module 106.

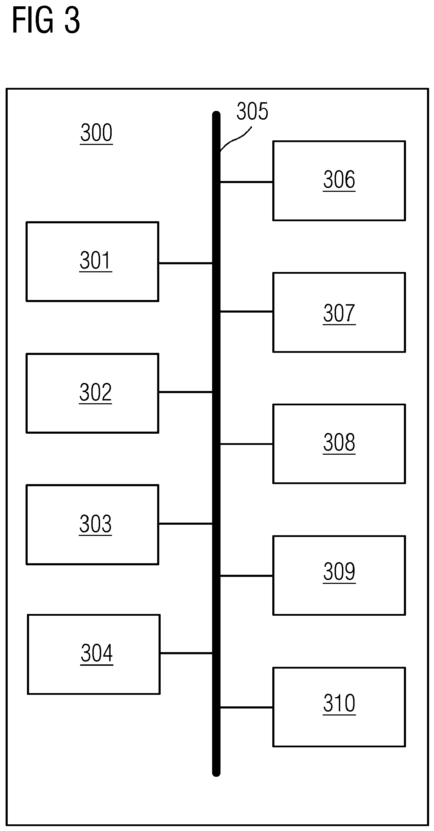

FIG **3** exemplarily illustrates the architecture of a computer system 300 employed by the query management system 103 illustrated in FIG **1,** for scheduling one or more queries. The query management system 103 employs the architecture of the computer system 300 illustrated in FIG **3.** The computer system 300 is programmable using a high level computer programming language. The computer system 300 may be implemented using programmed and purposeful hardware. As illustrated in FIG **3,** the computer system 300 comprises a processor 301, a non-transitory computer readable storage medium such as a memory unit 302 for storing programs and data, an input/output (I/O) controller 303, a network interface 304, a data bus 305, a display unit 306, input devices 307, a fixed media drive 308 such as a hard drive, a removable media drive 309 for receiving removable media, output devices 310, etc. The processor 301 refers to any one of microprocessors, central processing unit (CPU) devices, graphics processing unit (GPU), finite state machines, microcontrollers, digital signal processors, an application specific integrated circuit (ASIC), a field-programmable gate array (FPGA), etc., or any combination thereof, capable of executing computer programs or a series of commands, instructions, or state transitions. The processor 301 may also be implemented as a processor set comprising, for example, a general purpose microprocessor and a math or graphics co-processor. The processor 301 is selected, for example, from the Intel® processors, Advanced Micro Devices (AMD®) processors, International Business Machines (IBM®) processors, etc. The query management system 103 disclosed herein is not limited to a computer system 300 employing a processor 301. The computer system 300 may also employ a controller or a microcontroller. The processor 301 executes the modules, for example, 104, 105, 106, 107, 108, 109, etc., of the query management system 103.

The memory unit 302 is used for storing programs, applications, and data. For example, the data reception module 104, the pre-processing module 105, the training module 106, the ensemble module 107, the monitoring and feedback module 108, and the control module 109, etc., of the query management system 103 are stored in the memory unit 302 of the computer system 300. The memory unit 302 is, for example, a random access memory (RAM) or another type of dynamic storage device that stores information and instructions for execution by the processor 301. The memory unit 302 also stores temporary variables and other intermediate information used during execution of the instructions by the processor 301. The computer system 300 further comprises a read only memory (ROM) or another type of static storage device that stores static information and instructions for the processor 301. The I/O controller 303 controls input actions and output actions performed by the query management system 103.

The network interface 304 enables connection of the computer system 300 to the communication network 113. The For example, the query management system 103 connects to the communication network 113 via the network interface 304. In an embodiment, the network interface 304 is provided as an interface card also referred to as a line card. The network interface 304 comprises, for example, interfaces using serial protocols, interfaces using parallel protocols, and Ethernet communication interfaces, interfaces based on wireless communications technology such as satellite technology, radio frequency (RF) technology, near field communication, etc. The data bus 305 permits communications between the modules, for example, 104, 105, 106, 107, 108, 109, 110, 111, etc., of query management system 103.

The display unit 306, via the graphical user interface (GUI) 111, displays information such as the query execution statistics, for allowing the users 101, admin 102, to understand status of the query execution. The display unit 306 comprises, for example, a liquid crystal display, a plasma display, an organic light emitting diode (OLED) based display, etc. The input devices 307 are used for inputting data into the computer system 300. The input devices 307 are, for example, a keyboard such as an alphanumeric keyboard, a touch sensitive display device, and/or any device capable of sensing a tactile input.

Computer applications and programs are used for operating the computer system 300. The programs are loaded onto the fixed media drive 308 and into the memory unit 302 of the computer system 300 via the removable media drive 309. In an embodiment, the computer applications and programs may be loaded directly via the network 113. Computer applications and programs are executed by double clicking a related icon displayed on the display unit 306 using one of the input devices 307. The output devices 310 output the results of operations performed by the query management system 103. For example, the query management system 103 provides a graphical analysis of the query execution statistics.

The processor 301 executes an operating system, for example, the Linux® operating system, the Unix® operating system, any version of the Microsoft® Windows® operating system, the Mac OS of Apple Inc., the IBM® OS/2, etc. The computer system 300 employs the operating system for performing multiple tasks. The operating system is responsible for management and coordination of activities and sharing of resources of the computer system 300. The operating system further manages security of the computer system 300, peripheral devices connected to the computer system 300, and network connections. The operating system employed on the computer system 300 recognizes, for example, inputs provided by the senders using one of the input devices 307, the output display, files, and directories stored locally on the fixed media drive 308. The operating system on the computer system 300 executes different programs using the processor 301. The processor 301 and the operating system together define a computer platform for which application programs in high level programming languages are written.

The processor 301 of the computer system 300 employed by the query management system 103 retrieves instructions defined by the data reception module 104, the pre-processing module 105, the training module 106, the ensemble module 107, the monitoring and feedback module 108, the control module 109, etc., of the query management system 103 for performing respective functions disclosed in the detailed description of FIG 3. The processor 301 retrieves instructions for executing the modules, for example, 104, 105, 106, 107, 108, 109, etc., of the query management system 103 from the memory unit 302. A program counter determines the location of the instructions in the memory unit 302. The program counter stores a number that identifies the current position in the program of each of the modules, for example, 104, 105, 106, 107, 108, 109, etc., of the query management system 103. The instructions fetched by the processor 301 from the memory unit 302 after being processed are decoded. The instructions are stored in an instruction register in the processor 301. After processing and decoding, the processor 301 executes the instructions, thereby performing one or more processes defined by those instructions.

At the time of execution, the instructions stored in the instruction register are examined to determine the operations to be performed. The processor 301 then performs the specified operations. The operations comprise arithmetic operations and logic operations. The operating system performs multiple routines for performing a number of tasks required to assign the input devices 307, the output devices 310, and memory for execution of the modules, for example, 104, 105, 106, 107, 108, 109, etc., of the query management system 103. The tasks performed by the operating system comprise, for example, assigning memory to the modules, for example, 104, 105, 106, 107, 108, 109, etc., of the query management system 103, and to data used by the query management system 103, moving data between the memory unit 302 and disk units, and handling input/output operations. The operating system performs the tasks on request by the operations and after performing the tasks, the operating system transfers the execution control back to the processor 301. The processor 301 continues the execution to obtain one or more outputs. The outputs of the execution of the modules, for example, 104, 105, 106, 107, 108, 109, etc., of the query management system 103 are displayed to the user on the GUI 111.

For purposes of illustration, the detailed description refers to the query management system 103 being run locally on the computer system 300; however the scope of the present invention is not limited to the query management system 103 being run locally on the computer system 300 via the operating system and the processor 301, but may be extended to run remotely over the network 113 by employing a web browser and a remote server, a mobile phone, or other electronic devices. One or more portions of the computer system 300 may be distributed across one or more computer systems (not shown) coupled to the network.

Disclosed herein is also a computer program product comprising a non-transitory computer readable storage medium that stores computer program codes comprising instructions executable by at least one processor 301 for execution one or more queries as disclosed in the present invention. The computer program product comprises a first computer program code for receiving one or more queries and query execution requirements for at least one of the queries, a second computer program code for generating a plurality of prediction models based on query features extracted from the queries and system state variables, a third computer program code for predicting execution times for the queries based on the prediction models, a fourth computer program code for recommending at least one of two or more query execution engines 114 for scheduling of the queries based on the execution times, and a fifth computer program code for verifying the query execution requirements for scheduling of the queries on the query execution engines 114. The fourth computer program code further comprises a sixth computer program code for determining a scheduling priority for each of the two or more query execution engines 114 based on one or more scheduling parameters comprising, for example, a number of queries to be scheduled, the system state variables, and query features of each of the queries. The computer program product disclosed herein further comprises a seventh computer program code for monitoring execution of the queries on the query execution engines 114, an eighth computer program code for recording execution statistics associated with execution of the queries in a knowledgebase 110, a ninth computer program code for regenerating one or more of the prediction models, modifying one or more of the prediction models, or updating one or more of the prediction models, based on the execution statistics, and a tenth computer program code for performing one or more execution actions when verification of the query execution requirements fails.

In an embodiment, a single piece of computer program code comprising computer executable instructions performs one or more steps of the method according to the present invention, for analyzing data. The computer program codes comprising computer executable instructions are embodied on the non-transitory computer readable storage medium. The processor 301 of the computer system 300 retrieves these computer executable instructions and executes them. When the computer executable instructions are executed by the processor 301, the computer executable instructions cause the processor 301 to perform the steps of the method for analyzing data.

The query management system 103 exemplarily illustrated in FIG **3,** employs an adaptive strategy for efficient scheduling of queries on multiple query execution engines 114. The query management system 103 improves execution time by predicting the behavior of query with respect to various query execution engines 114, and thereby optimally schedules them. The query management system 103 considers the system state, that is, dynamic state of the system and the policies while scheduling the queries. The query management system 103 precludes rebuilding of the prediction models from scratch, when the policies change, by adapting the existing prediction models using the execution statistics. The query management system 103 precludes delayed execution of queries when the policy constraints for the recommended query execution engine 114 do not meet the query execution requirements, by recommending other query execution engine 114 satisfying these constraints. The query management system 103 improves the query performance for frequently occurring or similar queries, ensures optimum resource utilization by accounting system state, and continuously trains and enhances the prediction models thus avoid engineering rework, integration and repeated training of users on new technologies, thereby reducing overall query execution costs.

It will be readily apparent that the various methods, algorithms, and computer programs disclosed herein may be implemented on computer readable media appropriately programmed for computing devices. As used herein, "computer readable media" refers to non-transitory computer readable media that participate in providing data, for example, instructions that may be read by a computer, a processor or a similar device. Non-transitory computer readable media comprise all computer readable media, for example, non-volatile media, volatile media, and transmission media, except for a transitory, propagating signal.

The computer programs that implement the methods and algorithms disclosed herein may be stored and transmitted using a variety of media, for example, the computer readable media in a number of manners. In an embodiment, hard-wired circuitry or custom hardware may be used in place of, or in combination with, software instructions for implementation of the processes of various embodiments. Therefore, the embodiments are not limited to any specific combination of hardware and software. In general, the computer program codes comprising computer executable instructions may be implemented in any programming language. The computer program codes or software programs may be stored on or in one or more mediums as object code. Various aspects of the method and system disclosed herein may be implemented in a non-programmed environment comprising documents created, for example, in a hypertext markup language (HTML), an extensible markup language (XML), or other format that render aspects of a graphical user interface (GUI) or perform other functions, when viewed in a visual area or a window of a browser program. Various aspects of the method and system disclosed herein may be implemented as programmed elements, or non-programmed elements, or any suitable combination thereof. The computer program product disclosed herein comprises one or more computer program codes for implementing the processes of various embodiments.

Where databases are described such as the knowledgebase 110, it will be understood by one of ordinary skill in the art that (i) alternative database structures to those described may be readily employed, and (ii) other memory structures besides databases may be readily employed. Any illustrations or descriptions of any sample databases disclosed herein are illustrative arrangements for stored representations of information. Any number of other arrangements may be employed besides those suggested by tables illustrated in the drawings or elsewhere. Similarly, any illustrated entries of the databases represent exemplary information only; one of ordinary skill in the art will understand that the number and content of the entries can be different from those disclosed herein. Further, despite any depiction of the databases as tables, other formats including relational databases, object-based models, and/or distributed databases may be used to store and manipulate the data types disclosed herein. Likewise, object methods or behaviors of a database can be used to implement various processes such as those disclosed herein. In addition, the databases may, in a known manner, be stored locally or remotely from a device that accesses data in such a database. In embodiments where there are multiple databases in the system, the databases may be integrated to communicate with each other for enabling simultaneous updates of data linked across the databases, when there are any updates to the data in one of the databases.

The present invention can be configured to work in a network environment comprising one or more computers that are in communication with one or more devices via a network. The computers may communicate with the devices directly or indirectly, via a wired medium or a wireless medium such as the Internet, a local area network (LAN), a wide area network (WAN) or the Ethernet, a token ring, or via any appropriate communications mediums or combination of communications mediums. Each of the devices comprises processors, some examples of which are disclosed above, that are adapted to communicate with the computers. In an embodiment, each of the computers is equipped with a network communication device, for example, a network interface card, a modem, or other network connection device suitable for connecting to a network. Each of the computers and the devices executes an operating system, some examples of which are disclosed above. While the operating system may differ depending on the type of computer, the operating system will continue to provide the appropriate communications protocols to establish communication links with the network. Any number and type of machines may be in communication with the computers.

The present invention is not limited to a particular computer system platform, processor, operating system, network, or a method. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope and spirit of the invention in its aspects.

**Claims**

1. A computer implemented method of scheduling one or more queries, said method comprising:

   receiving said one or more queries and query execution requirements for at least one of said one or more queries;
   generating a plurality of prediction models based on query features extracted from said one or more queries and system state variables;
   predicting execution times for said one or more queries based on said prediction models;
   recommending at least one of two or more query execution engines for said scheduling of said one or more queries based on said execution times; and
   verifying said query execution requirements for said scheduling of said one or more queries on said at least one of said two or more query execution engines.

2. The computer implemented method according to claim 1, wherein said recommending of said at least one of said two or more query execution engines further comprises determining a scheduling priority for each of said two or more query execution engines based on one or more scheduling parameters.

3. The computer implemented method according to claim 1, wherein said query execution requirements comprise service level agreements associated with said one or more queries and policies governing execution of said one or more queries.

4. The computer implemented method according to claim 1, wherein said prediction models determine nonlinear relationships between said query features of said one or more queries and said system state variables.

5. The computer implemented method according to claim 1, further comprising:

   monitoring execution of said one or more queries scheduled on said at least one of said two or more query execution engines; and
   recording execution statistics associated with said execution of said one or more queries in a knowledgebase, and preferably further comprising performing one of re-generating one or more of said prediction models, modifying one or more of said prediction models, and
   updating one or more of said prediction models, based on said execution statistics.

6. The computer implemented method according to claim 1, further comprising performing one or more execution actions when said verification of said query execution requirements fails, wherein said one or more execution actions comprise delaying said execution of said queries on said at least one of said two or more query execution engines, re-recommending at least one of said two or more query execution engines, and terminating said execution of said queries on said at least one of said query execution engines.

7. A computer implemented system for scheduling one or more queries comprising:

two or more query execution engines;
a query management system in operable communication with said two or more query execution engines, said query management system comprising:

a non-transitory computer readable storage medium configured to store computer program instructions defined by modules of said query management system;
at least one processor communicatively coupled to said non-transitory computer readable storage medium, said at least one processor configured to execute said modules of said query management system; and said modules of said query management system comprising:

a data reception module configured to receive said one or more queries and query execution requirements for at least one of said one or more queries;
a pre-processing module configured to extract query features from said one or more queries;
an ensemble module configured to generate a plurality of prediction models based on said query features and system state variables;
said ensemble module further configured to predict execution times for said one or more queries based on said prediction models;
said ensemble module further configured to recommend at least one of two or more query execution engines for said scheduling of said one or more queries based on said execution times; and
a control module configured to verify said query execution requirements for said scheduling of said one or more queries on said at least one of said two or more query execution engines.

8. The computer implemented system according to claim 7, wherein said ensemble module is further configured to determine a scheduling priority for each of said two or more query execution engines based on one or more scheduling parameters.

9. The computer implemented system according to claim 7, wherein said query execution requirements comprise service level agreements associated with said one or more queries and policies governing execution of said one or more queries.

10. The computer implemented system according to claim 7, wherein said prediction models determine nonlinear relationships between said query features and said system state variables.

11. The computer implemented system according to claim 7, further comprising:

a monitoring and feedback module of said query management system, configured to monitor execution of said one or more queries scheduled on said at least one of said two or more query execution engines; and
a knowledgebase of said query management system, configured to record execution statistics associated with said execution of said one or more queries, and
preferably further comprising a training module of said query management system, configured to perform one of re-generation of one or more of said prediction models, modification of one or more of said prediction models, and updation of one or more of said prediction models, based on said execution statistics in communication with the control module of the query management system.

12. The computer implemented system according to claim 7, wherein said control module of said query management system, is further configured to perform one or more execution actions when said verification of said query execution requirements fails, wherein said one or more execution actions comprise delaying said execution of said queries on said at least one of said two or more query execution engines, re-recommending at least one of said two or more query execution engines, and terminating said execution of said queries on said at least one of said query execution engines.

13. A computer program product comprising a non-transitory computer readable storage medium, said non-transitory computer readable storage medium storing computer program codes that comprise instructions executable by at least one processor, said computer program codes comprising:

a first computer program code for receiving one or more queries and query execution requirements for at least one of said one or more queries, wherein said query execution requirements comprise service level agreements associated with said one or more queries and policies governing execution of said one or more queries;

a second computer program code for generating a plurality of prediction models based on query features extracted from said one or more queries and system state variables;

a third computer program code for predicting execution times for said one or more queries based on said prediction models, wherein said prediction models determine nonlinear relationships between said query features and said system state variables;

a fourth computer program code for recommending at least one of two or more query execution engines for scheduling of said one or more queries based on said execution times; and

a fifth computer program code for verifying said query execution requirements for said scheduling of said one or more queries on said at least one of said two or more query execution engines.

14. The computer program product according to claim 13, wherein said fourth computer program code further comprises a sixth computer program code for determining a scheduling priority for each of said two or more query execution engines based on one or more scheduling parameters.

15. The computer program product according to claim 13, further comprising:

a seventh computer program code for monitoring execution of said one or more queries scheduled on said at least one of said two or more query execution engines; and

an eighth computer program code for recording execution statistics associated with said execution of said one or more queries in a knowledgebase, and

preferably further comprising a ninth computer program code for performing one of re-generating one or more of said prediction models, modifying one or more of said prediction models, and updating one or more of said prediction models, based on said execution statistics, and

preferably further comprising a tenth computer program code for performing one or more execution actions when said verification of said query execution requirements fails, wherein said one or more execution actions comprise delaying said execution of said queries on said at least one of said two or more query execution engines, re-recommending at least one of said two or more query execution engines, and terminating said execution of said queries on said at least one of said query execution engines.

EP 3 211 548 A1

FIG 1

FIG 2

200

201

202

203

204

205

206

207

A

A

208

Y

209

N

210

211

213

Y

212

N

214

215

# FIG 3

Europäisches
Patentamt

European
Patent Office

Office européen
des brevets

# EUROPEAN SEARCH REPORT

Application Number

EP 17 15 7456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Ryan Marcus ET AL: "WiSeDB: A Learning-based Workload Management Advisor for Cloud Databases", arXiv preprint, 28 February 2016 (2016-02-28), pages 1-14, XP055367873, Retrieved from the Internet: URL:https://arxiv.org/pdf/1601.08221v2.pdf [retrieved on 2017-04-26] | 1-4, 6-10, 12-14 | INV. G06F17/30 ADD. G06F9/48 |
| Y | * abstract * * page 1, left-hand column, paragraph 1 - page 1, right-hand column, paragraph 3 * * page 2, right-hand column, paragraph 1 - paragraph 4 * * page 3, left-hand column, paragraph 2 - paragraph 5 * * page 3, right-hand column, paragraph 3 * * page 8, right-hand column, paragraph 4 - page 9, left-hand column, paragraph 2 * | 5,11,15 | |
| | ----- | | |
| X | JENNIE DUGGAN ET AL: "Contender: A Resource Modeling Approach for Concurrent Query Performance Prediction", PROC. 17TH INTERNATIONAL CONFERENCE ON EXTENDING DATABASE TECHNOLOGY (EDBT), 24 March 2014 (2014-03-24), pages 109-120, XP055368221, DOI: 10.5441/002/edbt.2014.11 | 1-4, 6-10, 12-14 | TECHNICAL FIELDS SEARCHED (IPC) G06F |
| Y | * page 109, right-hand column, paragraph 3 - page 110, left-hand column, paragraph 1 * * page 112, right-hand column, paragraph 4 - page 5, right-hand column, paragraph 4 * * page 115, left-hand column, paragraph 4 * * page 115, right-hand column, paragraph 3 - paragraph 5 * | 5,11,15 | |
| | ----- -/-- | | |

The present search report has been drawn up for all claims

| Place of search | Date of completion of the search | Examiner |
|---|---|---|
| The Hague | 3 May 2017 | Koutroumpas, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 17 15 7456

Europäisches
Patentamt

European
Patent Office

Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2012/109873 A1 (XIONG PENGCHENG [US] ET AL) 3 May 2012 (2012-05-03) | 5,11,15 | |
| A | * paragraph [0004] - paragraph [0008] * <br> * paragraph [0017] - paragraph [0037] * <br> * paragraph [0040] - paragraph [0041] * <br> ----- | 1-4, 6-10, 12-14 | |
| A | PENGCHENG XIONG ET AL: "ActiveSLA", CLOUD COMPUTING, ACM, 2 PENN PLAZA, SUITE 701 NEW YORK NY 10121-0701 USA, 26 October 2011 (2011-10-26), pages 1-14, XP058005048, DOI: 10.1145/2038916.2038931 ISBN: 978-1-4503-0976-9 <br> * abstract * <br> * page 2, right-hand column, paragraph 2 * <br> * page 3, right-hand column, paragraph 5 - page 5, left-hand column, paragraph 1 * <br> ----- | 1-15 | |

**TECHNICAL FIELDS SEARCHED (IPC)**

The present search report has been drawn up for all claims

| Place of search | Date of completion of the search | Examiner |
|---|---|---|
| The Hague | 3 May 2017 | Koutroumpas, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 7456

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2017

| Patent document cited in search report | Publication date | Patent family member(s) | Publication date |
|---|---|---|---|
| US 2012109873 A1 | 03-05-2012 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 201631006943